Europäisches Patentamt

(19) European Patent Office

Office européen des brevets

(11) Publication number: **0 007 248**
**B1**

(12) **EUROPEAN PATENT SPECIFICATION**

(45) Date of publication of patent specification: **22.06.83**

(51) Int. Cl.³: **G 07 F 7/06, B 07 C 5/10**

(21) Application number: **79301419.2**

(22) Date of filing: **17.07.79**

(54) Apparatus and method for classifying empty beverage containers.

(30) Priority: **17.07.78 US 924854**
**17.07.78 US 924855**

(43) Date of publication of application:
**23.01.80 Bulletin 80/2**

(45) Publication of the grant of the patent:
**22.06.83 Bulletin 83/25**

(84) Designated Contracting States:
**AT BE CH DE FR GB IT LU NL SE**

(56) References cited:
**DE - A - 2 645 024**
**US - A - 3 343 638**
**US - A - 3 549 890**
**US - A - 3 837 486**
**US - A - 3 955 179**
**US - A - 4 120 403**

(73) Proprietor: **THE MEAD CORPORATION**
**Mead World Headquarters Courthouse Square**
**Plaza N.E**
**Dayton, Ohio 45463 (US)**

(72) Inventor: **Dubberly, Gregory T.**
**2185 Thorncliff, N.E.**
**Atlanta Georgia 30345 (US)**
Inventor: **McGowan, Robert J.**
**1329 Fudge Drive**
**Xenia Ohio 45385 (US)**
Inventor: **Butcher, Larry R.**
**2685 Wyoming Drive**
**Xenia Ohio 45385 (US)**

(74) Representative: **Hepworth, John**
**J.M. Hepworth & Co. Furnival House 14/18 High**
**Holborn**
**London, WC1V 6DE (GB)**

Courier Press, Leamington Spa, England.

## Apparatus and method for classifying empty beverage containers

This invention relates to systems for classifying empty beverage containers of a type known in the trade as returnable. These are containers, usually glass bottles, for which the beverage purchaser is charged a deposit fee at the time of purchase. When the purchaser returns the empty container to a designated redemption centre, the deposit fee is refunded. Most beverage sales outlets also operate redemption centres, and the operation of these centres is usually a troublesome matter which takes clerks away from other more profitable tasks.

Beverages are commonly sold in containers of many different sizes, and in cartons containing groups of six or eight such containers. The customer may return the containers either individually or in cartons and may mix different types of containers in a single carton. It is the task of the redemption centre clerk to sort or classify the containers in accordance with their deposit values and to calculate the refund which is due. The clerk may make an actual refund or may give the customer a refund slip which can be redeemed at another location. This operation is so unprofitable that many supermarkets simply operate on an honour system, whereby customers stack their empties at a receiving location and report the return to a checkout clerk, who makes the appropriate refund.

An article inspection system is described in U.S. Patent No. 3,837,486 (Gardner) which is concerned with a simplified apparatus capable of checking articles for proper shape or silhouette as these articles are continuously moved by a conveyor through an inspection station.

In carrying out the Gardner invention, a pulse generating means is adapted to produce a train of pulses proportional in frequency to the speed of the conveyor and hence to the speed of the articles moving through the inspection station. Transducer means is mounted adjacent the conveyor and generates a "diameter" pulse having a duration proportional to the width or diameter of the article being inspected. Counter means is provided for recording the number of pulses produced during the duration of said "diameter" pulse, and means is provided in association with the counter to produce discrete "yes" and "no" output pulses when the count provided in the counter is above predetermined minimum and maximum values. Reject means is operable in response to these "yes" and "no" output signals for removing a defective article from the conveyor at a reject station, which station may be provided at the inspection station or downstream thereof.

However, the Gardner invention is not suitable for a bottle identification system which has to be capable of recognizing a wide range of bottle types exhibiting unpredictable variations in light transmissivity.

An alternative to the above described redemption techniques is an automatic system such as a system of the type described in Planke U.S. Patent 3,955,179. This system has a pair of conveyors, one for individual empty bottles and one for cartons. In operation the customer places the returned bottles and cartons on the appropriate conveyor for transportation through an illumination station. At the illumination station the containers are illuminated by a beam of collimated light, and a shadow of the containers is projected against an array of photo-detectors. The containers are identified by their shadows. This identification results in control signals for a logic network which computes the amount of the refund and controls the printing of a refund slip by an associated printer.

The invention provides apparatus for classifying empty beverage containers (23) comprising conveyor means (10), for accepting said containers and carrying them to a storage area, alignment means (15) for aligning said containers in a single file along said conveyor means, illumination means (16) positioned to direct illumination across said conveyor means in the path of containers being transported therealong, photosensing means (18) which generate sensing signals in response to the reception of illumination of the type generated by said illumination means and which are positioned alongside the said conveyor opposite said illumination means so that said sensing signals in response to the reception of illumination of the type generated by said illumination means and which are positioned alongside the said conveyor opposite said illumination means so that said sensing signals indicate the presence or absence of one of said containers on said conveyor means, a clock pulse generator (36) which generates clock pulses in synchronism with the movement of said conveyor means, and container identification means connected to receive said sensing signal and said clock pulses and comprising a registration circuit (401, 402, 405, 407, 409, 411, 413) which identifies said containers (23) in response to said sensing signal and said clock pulses, characterized in that said registration circuit comprises means (401) for receiving said sensing signals and generating a count enabling signal in response to light-to-dark transitions of said sensing signals, counting means (402, 403, 407) which are connected to commence counting said clock pulses when said count enabling signal is generated and thereafter to generate a recognition enabling count and a recognition disabling count, and registration means (409, 411, 413) which generate a registration signal if and only if a dark-to-light transition of said sensing signals occurs after said recognition enabling count is reached and before said recognition disabling count is reached.

One way of carrying out the invention is described in detail below with reference to the drawings which illustrate only one specific embodiment, in which:—

Figure 1 is a schematic drawing of the mechanism of this invention.

Figure 2 is a plan view of container handling mechanism in accordance with this invention,

Figure 3 is a schematic illustration of container movement during recognition by a row of photocells and associated circuitry,

Figures 4A and 4B is a schematic drawing of registration circuitry,

Figures 5A and 5B are deleted.

Figures 6A and 6B are a schematic drawing of money select circuitry.

Figures 7A and 7B are a schematic drawing of calculation circuitry.

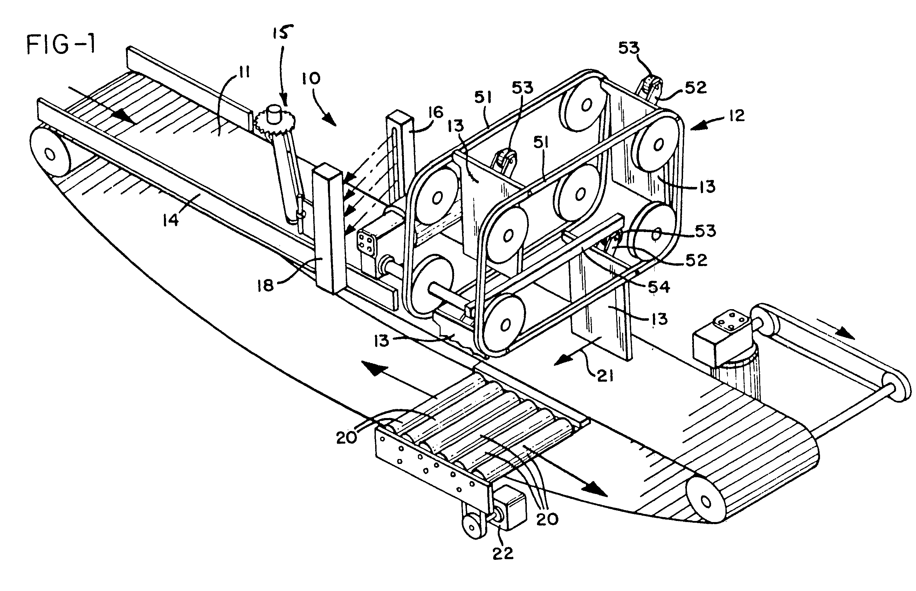

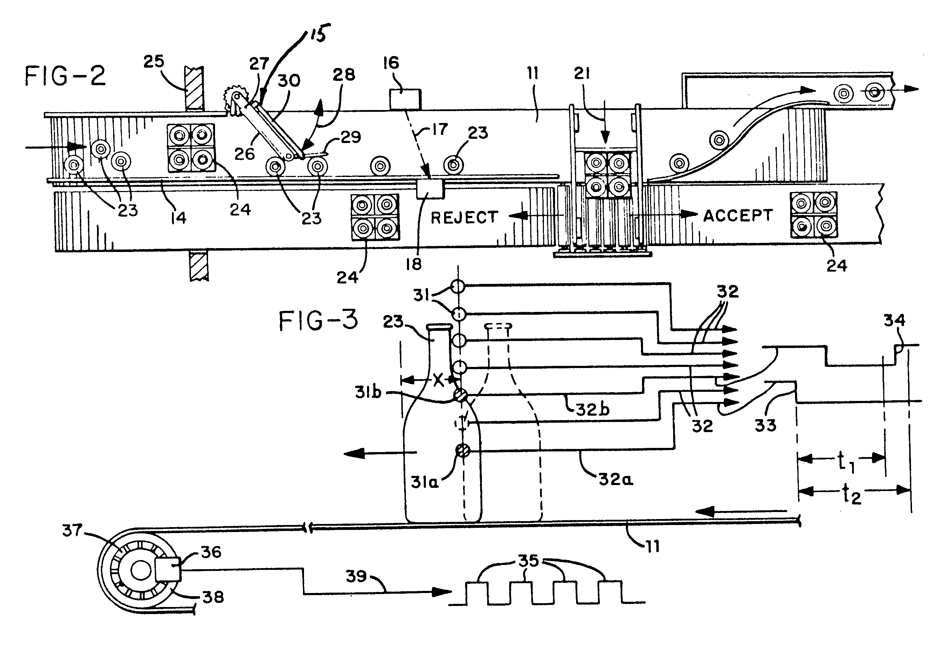

A conveyor arrangement 10 featured in this invention may be constructed as schematically illustrated in Figure 1. The arrangement includes a conveyor belt 11, with associated driving elements, an aligning mechanism as indicated generally at 15, and a paddle arrangement as indicated generally at 12. The cooperating operation of conveyor belt 11, paddle arrangement 12, and aligning mechanism 15 can best be understood by reference to Figure 2.

Movement of belt 11 is initiated by pushing a start button on a control panel (not illustrated). A customer who wishes to obtain a refund for empty beverage containers pushes the start button and thereafter loads individual empty containers 23 and cartons of empty containers 24 upon belt 11. Loading is performed at a receiving station, which is separated from the major portions of the conveyor 10 by a wall 25.

After being loaded upon belt 11, individual containers 23 and cartons 24 are met by a friction surface 26 on arm 27 of aligning mechanism 15. A ratchet arrangement causes arm 27 to oscillate back and forth as illustrated generally by the arrow 28, and this urges the containers and cartons sidewardly against sideboard 14. Sideboard 14 has a friction surface, which retards forward movement of the containers and cartons. The containers and cartons are trapped against sideboard 14 and behind arm 27 until released by outward movement of the arm. A blade 29 is pivotally attached to arm 27 and is urged against the cartons and containers by a spring mechanism 30. This produces separation between the cartons and containers in the direction of belt movement.

After movement past aligning mechanism 15, the containers and cartons pass a series of microswitches (not illustrated), which are positioned so as to be actuated only by cartons. Thereafter the containers and cartons pass into an illumination region between an illuminating apparatus 16 and a series of photosensors 18. Illuminating apparatus 16 generates a series of illuminating beams 17, which are directed angularly with respect to the direction transverse to the direction of conveyor movement. The angle between the beam direction and the transverse direction is preferably in the order of about 18 degrees, so that the identification circuits can recognize pairs of containers within a carton. Each beam 17 is directed toward an individual photocell 31 (Figure 3), and the beams are preferably beams of collimated infrared light produced by TIL 31 infrared light sources and collimating lenses. Preferably each beam 17 has a diameter in the order of about 0.635 cm.

After passage through the illuminating station the containers and cartons pass under paddle arrangement 12. Paddle arrangement 12 includes a series of paddles 13, which may be actuated to move in the direction indicated by the arrow 21. Paddle arrangement 12 is actuated whenever a carton 24 is positioned thereunder. As mentioned previously, the system is conditioned by a series of switches to discriminate between cartons and individual containers. Thus paddle arrangement 12 is never actuated during passage of an individual container thereunder, so that individual containers are carried along to a bottle storage area.

When paddle arrangement 12 is actuated, a paddle 13 is brought into contact with the side of a carton, and the carton is pushed transversely onto a separating station 19. Paddles 13 swing freely in ferris wheel fashion on chains 51, but during the lower quadrant of their movement, they are held rigidly downward by arms 52 which include a roller 53 for bearing against a track 54. This enables the paddles to push sidewardly against cartons.

Separating station 19 comprises a series of rollers 20, which are driven either forwardly or reversely by a drive motor 22. If the system recognizes the carton as being properly loaded, then drive motor 22 drives rollers forwardly, and the carton is accepted. If the carton is improperly loaded with bottles of different size or has empty cells, then motor 22 drives rollers 22 reversely, and the carton is rejected.

The technique for identifying a container for refund purposes can be understood by reference to Figure 3. As the belt 33 carries a container 23 in front of photosensor array 18, the light falling upon the vertically arranged row of photocells 31 is periodically blocked. Each photocell 31 has an output line 32, which transmits an electrical signal corresponding to light and dark conditions at the photocell. By way of example, the illustrated photocell 31a may be the first photocell to sense the presence of the container 23. This causes a transition in the output signal from line 32a as indicated at 33. A second photocell 31b has a light to dark transition somewhat later in time, followed at a still later time by a dark to light transition, both transitions being indicated by the output signal on line 32b. The latter transition on the output signal from line 32b is indicated by the reference numeral 34. Lines 32 are connected through a series of gates to different ones of a plurality of registration circuits. For processing the container illustrated in Figure 3, one such registration circuit is connected to lines 32a and 32b and is configured in such a manner as to generate a registration pulse if the transition 34 occurs after time $t_1$ and before time $t_2$. The time period between $t_1$ and $t_2$ is established by counting a series of clock pulses 35 generated by an encoder 36 arranged for viewing an optical disc 37 mounted on the drive motor 38. Output pulses from encoder 36 are carried by line 39.

It will be seen that clock pulses 35 occur in synchronism with the actual physical movement of container 23. In a typical case such an encoding arrangement may generate a new clock pulse 35 each time container 23 moves a distance of 0.0254 cm. Thus by counting the clock pulses 35 the registration circuitry responds to beverage containers having a particular horizontal dimension within some predetermined dimensional range. For instance, a particular registration circuit may be configured for recognizing bottles having an illustrated dimension X equal to 6.35 cm. A bottle meeting this criterion would cause the transition 34 to occur on line 32b at a point in time determined by counting 250 of the clock pulses 35. In order to allow for some error a registration "window" of perhaps 20 clock pulses might be employed. This would cause generation of a registration signal for bottles having a dimension X ranging between 6.096 cm and 6.604 cm. It is apparent that a system constructed in accordance with this invention could be made to recognize a great many different registration conditions.

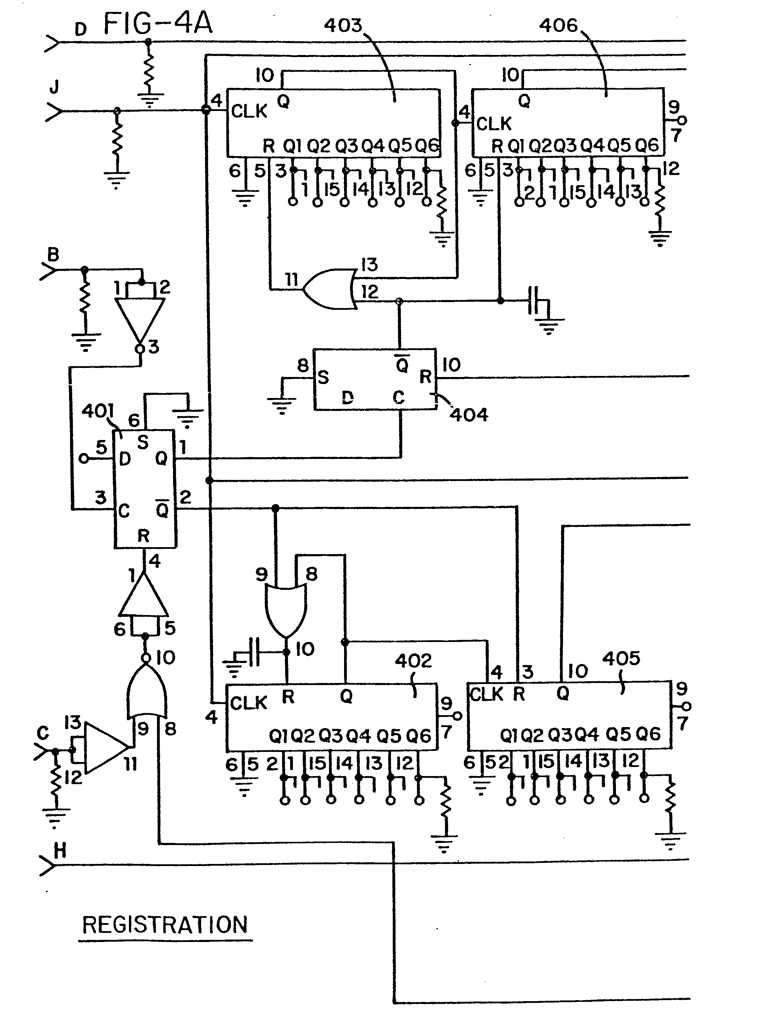

Electrical circuitry for controlling the apparatus of Figures 1 and 2 and generating container value signals is illustrated in Figures 4A, 4B, 6A, 6B, 7A and 7B. In addition to the illustrated circuitry the apparatus utilizes fairly conventional power supplies, display controls, transmission lines, clock signal generators, photosensors, drivers, and amplifiers. Table 1 lists circuit types for integrated circuits illustrated in the detailed electrical schematics presented herein.

### TABLE I

| Reference numeral | Circuit type |
| --- | --- |
| 401 | 4013 |
| 402 | 14557 |
| 403 | 14557 |
| 404 | 4013 |
| 405 | 14557 |
| 406 | 14557 |
| 407 | 14557 |
| 408 | 14557 |
| 409 | 4013 |
| 410 | 4013 |
| 411 | 4013 |
| 412 | 4013 |
| 413 | 14528 |
| 415 | 14528 |
| 501 | 4076 |
| 502 | 4076 |
| 503 | 4013 |
| 504 | 4013 |
| 505 | 14040 |
| 506 | 4013 |
| 507 | 4013 |
| 601 | 4008 |
| 602 | 4008 |
| 603 | 4008 |
| 604 | 4076 |
| 605 | 4076 |
| 606 | 4076 |
| 607 | 4029 |
| 608 | 4029 |
| 609 | 4029 |
| 701 | 4013 |
| 702 | 4013 |
| 703 | 4013 |
| 704 | 4013 |
| 705 | 4013 |
| 706 | 4013 |
| 707 | 4013 |
| 708 | 4013 |
| 709 | 4013 |
| 710 | 4013 |
| 711 | 4013 |
| 712 | 4013 |
| 713 | 4029 |
| 714 | 4013 |

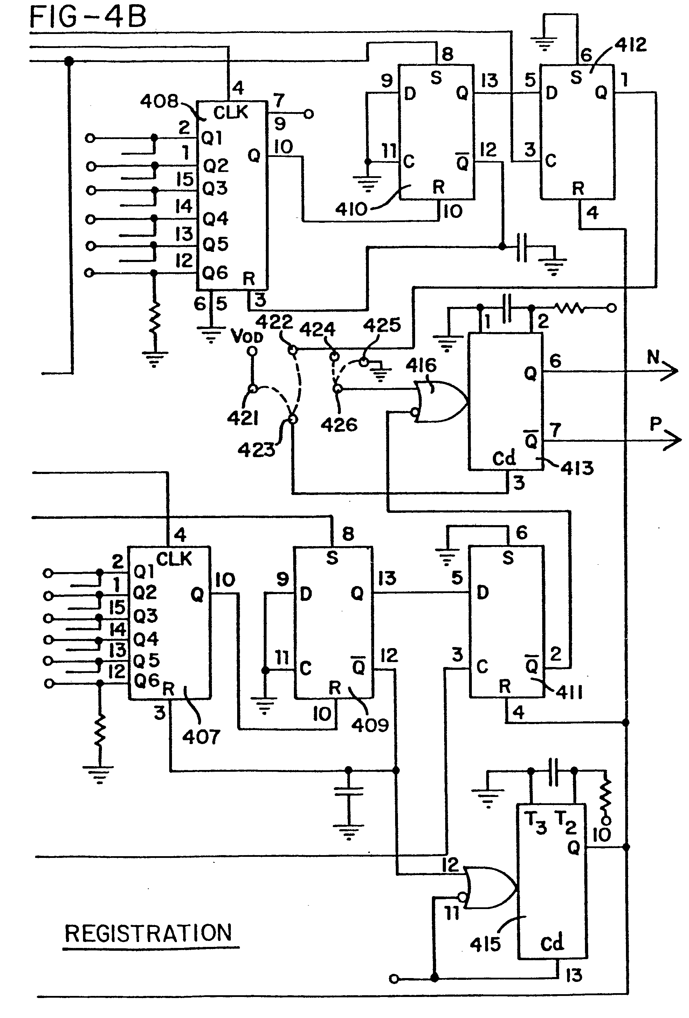

Figures 4A and 4B illustrate the registration circuitry, which generates the above mentioned registration pulses. The circuitry of Figures 4A and 4B generates a registration signal for a container having particular dimension within some predetermined range or for different containers having the specified dimension within that range. Typically empty containers can be grouped in groups having some common dimensional characteristic within a relatively small dimensional range and a common refund value. The circuitry of Figures 4A and 4B would generate a registration signal for all such containers, and this registration signal would appear at output terminals 6 and 7 of integrated circuit 413. Containers having a different common dimensional characteristic are identified by registration circuitry similar to the circuitry of Figures 4A and 4B but programmed in a different manner as hereinafter described.

Conveyor clock pulses 35 are received at terminal J of the registration circuitry and are applied to the clock terminals of counters 402 and 403. Counting of such clock pulses is enabled by a signal at terminal B, and this signal may be the transition 33 appearing on line 32a as described above with reference to Figure 3. The signal level at terminal C also controls conveyor clock counting. Terminal C is connected to that one of photocells 31 which is located at a height immediately over the top of the container. The photocell which is connected to terminal C must be illuminated to order for counting to be enabled.

It will be seen that counter 402 is connected to a counter 405 in serial fashion, so that an output appears at terminal 10 of counter 405 after a predetermined number of conveyor clock pulses have been counted. This count, which takes place during a time period $t_1$ as illustrated in Figure 3, is controlled by presetting the counting control terminals of counters 402 and 405.

While clock 407 is counting, input terminal 5 of flip-flop 411 is HI, so that the flip-flop is conditioned to respond to a signal transition, such as the transition 34, appearing on input terminal H. If the signal transition occurs at terminal H during the registration window, then flip-flop 411 is triggered to produce an output for application to gate portion 416 of integrated circuit 413. Integrated circuit 413 produces registration output signals on its N and P terminals.

Six terminals 421 through 426 are provided for added counting flexibility. For a simple registration, as above described, a jumper is attached between terminals 421 and 423, and another jumper is attached between terminals 425 and 426. Different jumper connections may be made in order to enable registration on the basis of photocell transitions appearing at both of terminals D and H. In the case where photocell transitions appearing at terminal D are to be recognized, counters 403, 406 and 408 are utilized. These counters work in a manner similar to counters 402, 405, and 407 for controlling flip-flops 410 and 412. If it is desired to condition the registration signal output upon occurrence of appropriately timed signal transitions at both of terminals D and H, then a jumper is placed between terminals 422 and 423, and another jumper is placed between terminals 425 and 426. A sequential count registration condition can be made by placing a jumper between terminals 421 and 423 and another jumper between terminals 424 and 426.

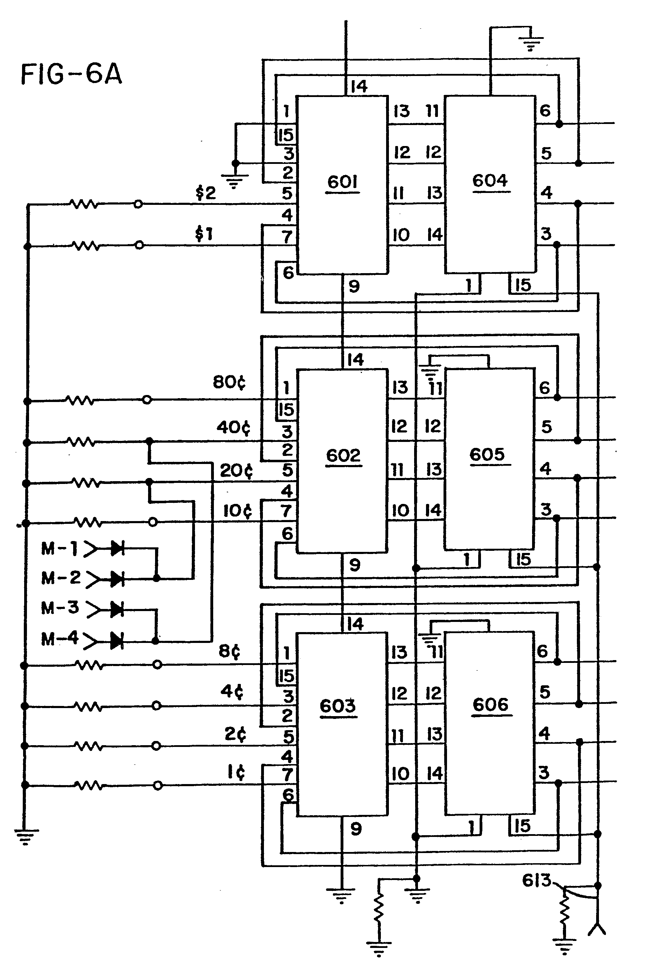

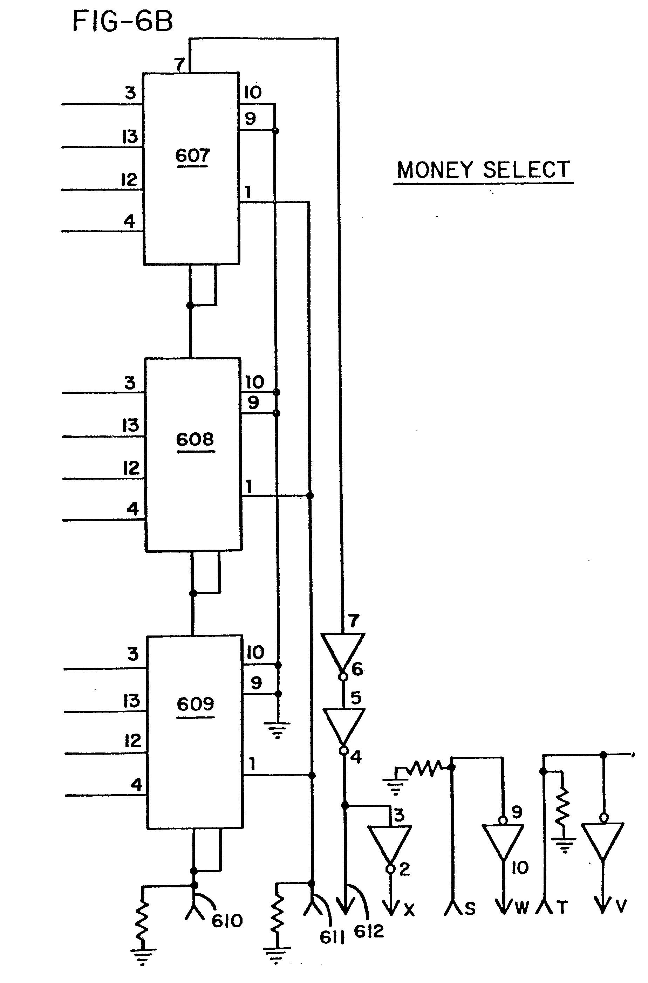

When registration signals are generated by the registration circuitry, they are applied to input terminals for money select circuitry as illustrated in Figures 6A and 6B. Connections to this circuitry in general depend upon the types of containers expected. For instance, in a market area wherein there are only 10 cent bottles and 20 cent bottles to be received, the money select circuitry may be connected to receive registration inputs only from terminals M-1 through M-4 as illustrated. Terminal M-1 might be connected to receive registration signals from registration circuitry which recognizes individual 10 cent bottles, while terminal M-2 might be connected to receive registration signals only from circuitry which recognizes pairs of 10 cent bottles arranged side by side in cartons. Similarly, input terminals M-3 and M-4 may receive registration signals for individual 20 cent bottles and 20 cent bottle pairs respectively.

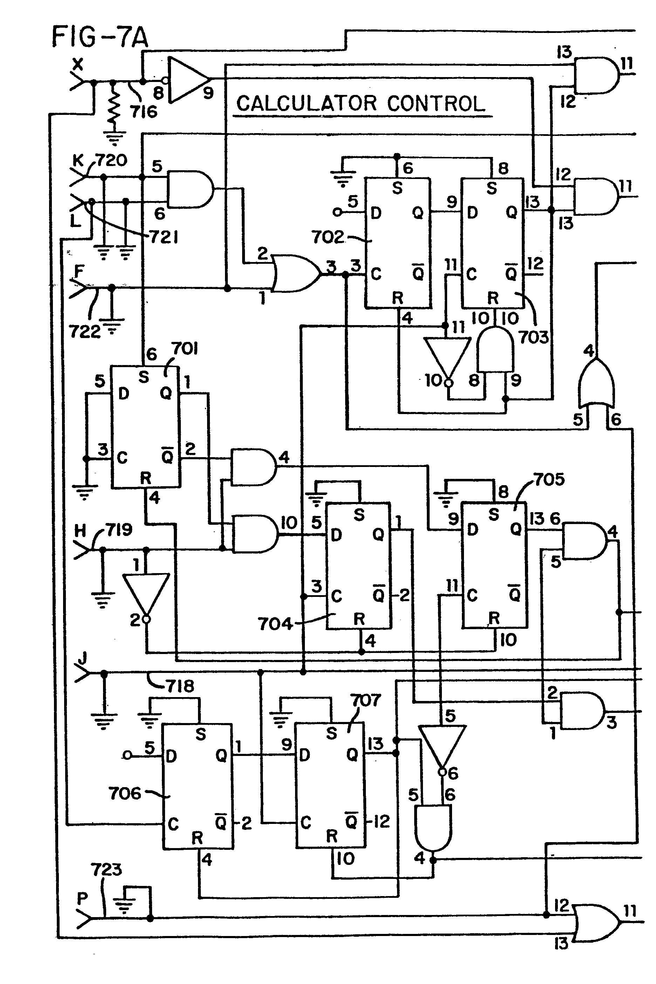

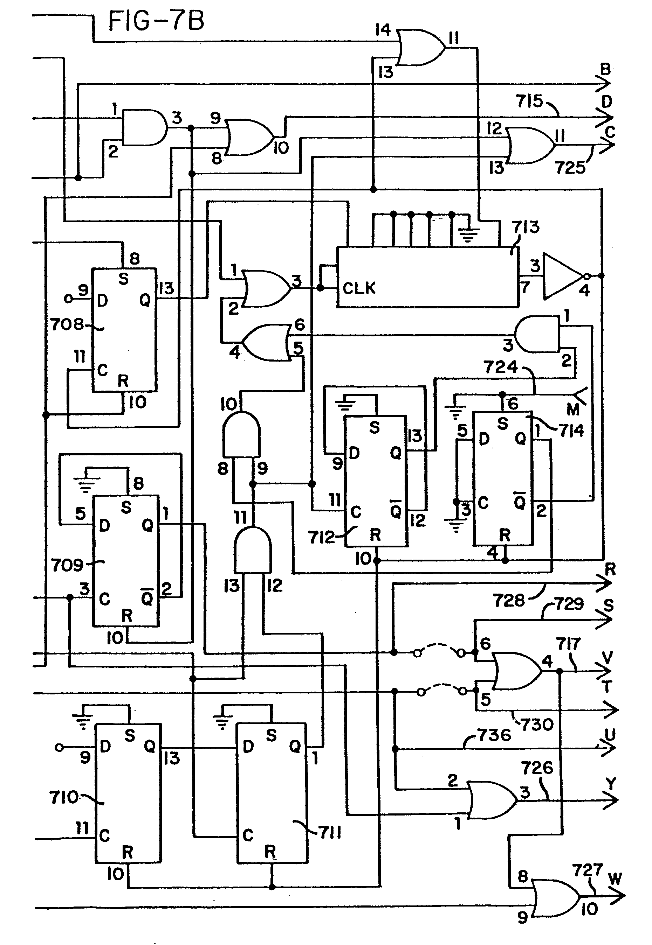

If 10 cent bottles are returned in a six bottle carton, three registration signals will appear at terminal M-2, and three 20 cent counts will be made by the system. If a single 10 cent bottle is registered, then a single 20 cent count is made. The calculation circuitry of Figures 7A and 7B perform a division by 2 in order to reduce such a single 20 cent count to a 10 cent output. 20 cent bottles are handled in a similar manner.

For the above example money counts are added by integrated circuits 602 and 605 and later counted down serially through a counting chain comprising counters 607, 608 and 609. For the described arrangement integrated circuits 601, 603, 604 and 606 are not utilized. Counting of the stored money value is initiated by a signal at line 611, which is generated by the calculation circuitry of Figures 7A and 7B and appears as an output at line 715 thereof. The money select circuitry counts 100 KHz clock pulses appearing at line 610, and when the countdown is completed a DONE signal appears at line 612.

**Claims**

1. Apparatus for classifying empty beverage containers (23) comprising conveyor means (10), for accepting said containers and carrying them to a storage area, alignment means (15) for aligning said containers in a single file along said conveyor means, illumination means (16) positioned to direct illumination across said conveyor means in the path of containers being transported therealong, photosensing means (18) which generate sensing signals in response to the reception of illumination of the type generated by said illumination means and which are positioned alongside said conveyor opposite said illumination means so that said sensing signals indicate the presence or absence of one of said containers on said conveyor means, a clock pulse generator (36) which generates clock pulses in synchronism with the movement of said conveyor means, and container identification means connected to receive said sensing signal and said clock pulses and comprising a registration circuit (401, 402, 405, 407, 409, 411, 413) which identifies said containers (23) in response to said sensing signal and said clock pulses, characterized in that said registration circuit comprises means (401) for receiving said sensing signals and for generating a count enabling signal in response to light-to-dark transitions of said sensing signals, counting means (402, 405, 407) which are connected to commence counting said clock pulses when said count enabling signal is generated and thereafter to generate a recognition enabling count and a recognition disabling count, and registration means (409, 411, 413) which generate a registration signal if, and only if, a dark-to-light transition of said sensing signals occurs after said recognition enabling count is reached and before said recognition disabling count is reached.

2. Apparatus according to claim 1, further characterized in that said container identification means comprises a plurality of said registration circuits, each responding to different recognition enabling counts and different recognition disabling counts.

3. Apparatus according to claim 1, further characterized in that said counting means comprises a first counter (402, 405) for generating said recognition enabling count and a second counter (407) for generating said recognition disabling count.

4. Apparatus according to claim 3, further characterized in that said second counter (407) is connected for counting only those of said clock pulses which occur subsequent to a generation of a recognition enabling count by said first counter (402, 405).

5. Apparatus according to claim 4, further characterized in that said registration means comprises a first flip-flop (409) which is set by a recognition enabling count from said first counter and reset by a recognition disabling count from the said second counter, and a second flip-flop (411) which is set by said first flip-flop and reset by dark-to-light transitions of said sensing signals.

6. Apparatus according to claim 1, further characterized in that said registration circuit comprises second counting means (403, 406, 408) which are connected to commence counting said clock pulse when said count enabling signal is generated and thereafter to generate a second recognition enabling count and a second recognition disabling count, and second registration means (410, 412) cooperating with the first said registration means (409, 411, 413) to cause generation of a registration signal if, and only if, there is a second dark-to-light transition of said sensing signals which occur after said second recognition enabling count is reached and before said second recognition disabling count is reached.

7. Apparatus according to any of claims 1 to 6, further characterized in that said photosensing means comprises a plurality of photocells (31) arranged in a vertically extending column.

8. Apparatus according to claim 6, further characterized in that said count enabling means (401) is connected for inhibiting said count enabling signal when a photocell (31) at a predetermined height is not illuminated.

9. Method of classifying an empty beverage container comprising the steps of transporting said container through an observation station, generating a series of clock pulses in synchronism with movement of said container through said observation station, observing said container during movement through said observation station and generating a first transition signal when the leading edge of said container passes a predetermined leading edge observation point, characterized by counting said clock pulses which occur after generation of said first transition signal and generating first and second count signals in response to occurrence of predetermined first and second values for said count, continuing to observe the movement of said container through said observation station and generating a second transition signal when the trailing edge of said container passes a predetermined trailing edge observation point, and generating a recognition signal if, and only if, said second transition signal occurs after said first count signal and prior to said second count signal.

10. Method according to claim 9, further characterized by generating another first transition signal when the leading edge of said container passes another predetermined leading edge observation point, counting said clock pulses which occur after generation of said another first transition signal and generating third and fourth count signals in response to occurrence of predetermined third and fourth values for said count, generating another second transition signal when the trailing edge of said container passes another predetermined trailing edge observation point, and generating said recognition signal only upon joint occurrence of said second transition signal between said first and second count signals and said another second transition signal between said third and fourth signals.

**Patentansprüche**

1. Vorrichtung zum Klassifizieren leerer Getränkebehälter (23) mit einem Fördermittel (10) zur Entgegennahme der Behälter und zu deren Transport zu einer Lagerfläche, Ausrichtmitteln (15) zum Ausrichten der Behälter in einer einzigen Reihe entlang des Fördermittels, Beleuchtungsmitteln (16), die so angeordnet sind, daß sie eine Beleuchtung quer über das Fördermittel in den Transportweg von entlang des Fördermittels bewegten Behältern richten, photosensitiven Mitteln (18), die Abfühlsignale als Reaktion auf den Empfang von Licht desjenigen Typs erzeugen, der von den Beleuchtungsmitteln ausgesendet wird, und die entlang dem Fördermittel den Beleuchtungsmitteln gegenüberliegend angeordnet sind, so daß die Abfühlsignale die Anwesenheit oder Abwesenheit eines dieser Behälter auf dem Fördermittel anzeigen, einem Taktgenerator (36), der Zeittaktimpulse in Synchronisation mit der Bewegung des Fördermittels erzeugt, und Behältererkennungsmitteln, die so geschaltet sind, daß sie diese Abfühlsignale und diese Zeittaktimpulse empfangen, und eine Registrierschaltung (401, 402, 405, 407, 409, 411, 413) umfassen, die die Behälter (23) durch Ansprechen auf die Abfühlsignale und die Zeittaktsignale erkennt, dadurch gekennzeichnet, daß die Registrierschaltung Mittel (401) zum Empfangen der Abfühlsignale und zum Erzeugen eines Zählfreigabesignals als Reaktion auf Hell-Dunkel-Übergänge der Abfühlsignale, Zählmittel (402, 405, 407), die so geschaltet sind, daß sie das Zählen der Zeittaktimpulse beginnen, wenn das Zählfreigabesignal ausgelöst wird, und danach ein Erkennungs-Freigabe-Zählsignal und ein Erkennungs-Sperr-Zählsignal erzeugen, und Registriermittel (409, 411, 413) einschließt, die dann und nur dann ein Registriersignal erzeugen, wenn ein Dunkel-Hell-Übergang der Abfühlsignale vorkommt, nachdem das Erkennungs-Freigabe-Zählsignal erreicht ist und bevor das Erkennungs-Sperr-Zählsignal erreicht wird.

2. Vorrichtung nach Anspruch 1, dadurch gekennzeichnet, daß die Behältererkennungsmittel eine Mehrzahl dieser Registrierschaltungen umfassen, von denen jede auf andere Erkennungs-Freigabe-Zählsignale und Erkennungs-Sperr-Zählsignale anspricht.

3. Vorrichtung nach Anspruch 1, dadurch gekennzeichnet, daß diese Zählmittel einen ersten Zähler (402, 405) zum Erzeugen des Erkennungs-Freigabe-Zählsignals und einen zweiten Zähler (407) zum Erzeugen des Erkennungs-Sperr-Zählsignals aufweisen.

4. Vorrichtung nach Anspruch 3, dadurch gekennzeichnet, daß der zweite Zähler (407) so geschaltet ist, daß er nur diejenigen Zeittaktimpulse zählt, die im Anschluß an die Erzeugung eines Erkennungs-Freigabe-Zählsignals durch den ersten Zähler (402, 405) auftreten.

5. Vorrichtung nach Anspruch 4, dadurch gekennzeichnet, daß diese Registriermittel ein erstes Flip-Flop (409) enthalten, das durch ein Erkennungs-Freigabe-Zählsignal des ersten Zählers gesetzt und durch ein Erkennungs-Sperr-Zählsignal des zweiten Zählers zurückgesetzt wird, und ein zweites Flip-Flop (411), welches durch das erste Flip-Flop gesetzt und durch einen Dunkel-Hell-Übergang bei den Abfühlsignalen zurückgesetzt wird.

6. Vorrichtung nach Anspruch 1, dadurch gekennzeichnet, daß die Registrierschaltung zweite Zählmittel (403, 406, 408) umfaßt, die so geschaltet sind, daß sie beginnen, das Zeittaktsignal zu zählen, wenn das Erkennungs-Freigabe-Zählsignal erzeugt wird, und danach ein zweites Erkennungs-Freigabe-Zählsignal und eine zweites Erkennungs-Sperr-Zählsignal erzeugen, und zweite Registriermittel (410, 412), die mit diesen ersten Registriermitteln (409, 411, 413) zusammenarbeiten, um die Erzeugung eines Registriersignals dann und nur dann zu erzeugen, wenn ein zweiter Dunkel-Hell-Übergang der Abfühlsignale ansteht, die auftreten, nachdem das zweite Erkennungs-Freigabe-Zählsignal erreicht ist und bevor das zweite Erkennungs-Sperr-Zählsignal erreicht wird.

7. Vorrichtung nach einem der Ansprüche 1 bis 6, dadurch gekennzeichnet, daß diese photosensitiven Mittel eine Mehrzahl von Photozellen (31) umfassen, die in einer senkrecht verlaufenden Säule angeordnet sind.

8. Vorrichtung nach Anspruch 6, dadurch gekennzeichnet, daß die Zählfreigabemittel (401) so geschaltet sind, daß sie das Zählfreigabesignal unterdrücken, wenn eine Photozelle (31) in bestimmter Höhe nicht beleuchtet wird.

9. Verfahren zum Klassifizieren eines leeren Getränkebehälters mit den Schritten Transportieren des Behälters durch eine Beobachtungsstation, Erzeugen einer Folge von Zeittaktimpulsen in Synchronisation mit der Bewegung des Behälters durch die Beobachtungsstation, Beobachten des Behälters während der Bewegung durch die Beobachtungsstation und Erzeugen eines ersten Übergangssignals, wenn die Vorlaufkante des Behälters einen bestimmten Vorlaufkanten-Beobachtungspunkt passiert, gekennzeichnet durch Zählen der Zeittaktimpulse, die nach der Erzeugung dieses ersten Übergangssignals auftreten und Ergeugen von einem ersten und einem zweiten Zählsignal als Reaktion auf das Auftreten eines ersten und zweiten vorbestimmten Wertes für das jeweilige Zählsignal, Fortsetzen der Beobachtung der Bewegung des Behälters durch die Beobachtungsstation und Erzeugen eines zweiten Übergangssignals, wenn die Nachlaufkante des Behälters einen bestimmten Nachlaufkanten-Beobachtungspunkt passiert, und Erzeugen eines Erkennungssignals dann und nur dann, wenn das zweite Übergangssignal nach dem ersten Zählsignal und vor dem zweiten Zählsignal auftritt.

10. Verfahren nach Anspruch 9, gekennzeichnet durch Erzeugen eines weiteren ersten Übergangssignals, wenn die Vorlaufkante des Behälters einen weiteren bestimmten Vorlaufkanten-Beobachtungspunkt passiert, Zählen der Zeittaktimpulse, die nach der Erzeugung des weiteren ersten Übergangssignals auftreten, und Erzeugen eines dritten und eines vierten Zählsignals als Reaktion auf das Auftreten eines bestimmten dritten und vierten Wertes für das jeweilige Zählsignal, Erzeugen eines weiteren zweiten Übergangssignals, wenn die Nachlaufkante des Behälters einen weiteren, bestimmten Nachlaufkanten-Beobachtungspunkt passiert, und Erzeugen des Erkennunggsignals nur bei gemeinsamem Auftreten des zweiten Übergangssignals zwischen dem ersten und dem zweiten Zählsignal und des weiteren zweiten Übergangssignals zwischen dem dritten und dem vierten Zählsignal.

**Revendications**

1. Appareil de classification de récipients à boissons vides (23) comprenant un transporteur (10) adapté pour recevoir ces récipients et les entraîner jusqu'à une zone de stockage, des moyens de mise en alignement (15) des récipients en une seule file sur le transporteur au long de celui-ci, des moyens lumineux (16) placés de manière à diriger un éclairage transversal à ce dernier dans le parcours des récipients qu'il transporte, des moyens de détection photoélectriques (18) qui engendrent des signaux de détection en réponse à la recéption d'un éclairage du type produit par les moyens lumineux et qui sont placés le long du transporteur, à l'opposé de ces moyens lumineux, de sorte que les signaux de détection indiquent la présence ou l'absence d'un des récipients sur le transporteur, un générateur d'impulsions d'horloge (36) qui engendre des impulsions d'horloge en synchronisme avec le déplacement du transporteur, et des moyens d'identification de récipients branchés de manière à recevoir le signal de détection et les impulsions d'horloge et comprenant un circuit d'enregistrement (401, 402, 405, 407, 409, 411, 413) qui identifie les récipients (23) en réponse au signal de détection et aux impulsions d'horloge, cet appareil étant caractérisé par le fait que le circuit d'enregistrement comprend des moyens (401) adaptés pour recevoir les signaux de détection et produire un signal de mise en position de comptage en réponse à des transitions clair à sombre des signaux de détection, des moyens de comptage (402, 405, 407) qui sont branchés de manière à commencer à compter les impulsions d'horloge quand le signal de mise en position du comptage est produit et à engendrer ensuite un compte de mise en position de reconnaissance et un compte de mise hors de position de reconnaissance, et des moyens d'enregistrement (409, 411, 413) qui produisent un signal d'enregistrement si, et seulement si, une transition sombre à clair des signaux de détection se produit après que le compte de mise en position de reconnaissance ait été atteint et avant que le compte de mise hors de position de reconnaissance ne soit atteint.

2. Appareil selon la revendication 1, caractérisé en outre par le fait que les moyens d'identification de récipients comprennent plusieurs circuits d'enregistrement, répondant chacun à différents comptes de mise en position de reconnaissance et à différents comptes de mise hors de position de reconnaissance.

3. Appareil selon la revendication 1, caractérisé par le fait que les moyens de comptage comprennent un premier compteur (402, 405) servant à produire le compte de mise en position de reconnaissance et un deuxième compteur (407) servant à produire le compte de mise hors de position de reconnaissance.

4. Appareil selon la revendication 3, caractérisé par le fait que le deuxième compteur (407) est branché de manière à compter seulement celles des impulsions d'horloge qui se produisent après qu'un compte de mise en position de reconnaissance ait été produit par le premier compteur (402, 405).

5. Appareil selon la revendication 4, caractérisé par le fait que les moyens d'enregistrement comprennent une première bascule (409) qui est mise en service par un compte de mise en position de reconnaissance venant du premier compteur et remise en position par un compte de mise hors de position de reconnaissance venant du deuxième compteur, et une deuxième bascule (411) qui est mise en position par la première bascule et remise en position par des transitions sombre à clair des signaux de détection.

6. Appareil selon la revendication 1, caractérisé par le fait qui le circuit d'enregistrement comprend des deuxièmes moyens de comptage (403, 406, 408) qui sont branchés de manière à commencer à compter l'impulsion d'horloge quand le signal de mise en position de comptage est produit et à engendrer ensuite un deuxième compte de mise en position de reconnaissance et un deuxième compte de mise hors de position de reconnaissance, et des deuxièmes moyens d'enregistrement (410, 412) coopérant avec les premiers moyens d'enregistrement (409, 411, 413) pour faire en sorte qu'un signal d'enregistrement soit produit si, et seulement si, il existe une deuxième transition sombre à clair des signaux de détection qui se produit après que le deuxième compte de mise en position de reconnaissance ait été atteint et avant que le deuxième compte de mise hors de position de reconnaissance ne soit atteint.

7. Appareil selon l'une quelconque des revendications 1 à 6, caractérisé par le fait que les moyens de détection photoélectriques comprennent plusieurs cellules photoélectriques (31) disposées en une colonne dirigée verticalement.

8. Appareil selon la revendication 6, caractérisé par le fait que les moyens de mise en position de comptage (401) sont branchés de manière à inhiber le signal de mise en position de comptage lorsqu'une cellule photoélectrique (31) située à une hauteur prédéterminée n'est pas éclairée.

9. Procédé de classification de récipients à boissons vides, comprenant les étapes qui consistent à transporter ces récipients à travers un poste d'observation, à produire une série d'impulsions d'horloge en synchronisme avec le déplacement de ces récipients à travers ce poste d'observation, à observer chaque récipient pendant son déplacement à travers le poste d'observation et à produire un premier signal de transition quand le bord antérieur du récipient passe par un point prédéterminé d'observation du bord antérieur, procédé caractérisé par le fait que l'on compte les impulsions d'horloge qui se produisent après que le premier signal de transition ait été produit et que l'on produit des premier et deuxième signaux de comptage en réponse à l'apparition d'une première et d'une deuxième valeur prédéterminée du compte, que l'on continue d'observer le mouvement du récipient à travers le poste d'observation et que l'on engendre un deuxième signal de transition quand le bord postérieur du récipient passe par un point prédéterminée d'observation de bord postérieur, et que l'on produit un signal de reconnaissance si, et seulement si, le deuxième signal de transition se produit après le premier signal de comptage et avant le deuxième signal de comptage.

10. Procédé selon la revendication 9, caractérisé par le fait que l'on produit un autre premier signal de transition quand le bord antérieur du récipient passe par un autre point prédéterminé d'observation de bord antérieur,

que l'on compte les impulsions d'horloge qui se produisent après que cet autre premier signal de transition ait été engendré et que l'on produit un troisième et un quatrième signal de comptage en réponse à l'apparition d'une troisième et d'une quatrième valeur prédéterminée du compte, que l'on produit un autre deuxième signal de transition quand le bord postérieur du récipient passe par un autre point prédéterminé d'observation de bord postérieur et que l'on produit le signal de reconnaissance seulement lorsque, conjointement, le deuxième signal de transition se produit entre les premier et deuxième signaux de comptage et l'autre deuxième signal de transition entre les troisième et quatrième signal de comptage.

FIG-1

FIG-2

FIG-3

**0 007 248**

FIG-4A

REGISTRATION

# FIG-4B

REGISTRATION

0 007 248

FIG-6A

5

FIG-6B

0 007 248

MONEY SELECT

FIG-7A

CALCULATOR CONTROL

0 007 248

7

FIG-7B